(19)

Europäisches
Patentamt
European
Patent Office
Office européen
des brevets

(11) **EP 4 506 729 A1**

(12) **EUROPEAN PATENT APPLICATION**
published in accordance with Art. 153(4) EPC

(43) Date of publication:
**12.02.2025 Bulletin 2025/07**

(21) Application number: **23777606.7**

(22) Date of filing: **20.01.2023**

(51) International Patent Classification (IPC):
*G01S 17/02* (2020.01)   *G01S 17/04* (2020.01)
*G01S 7/484* (2006.01)   *G01S 7/4863* (2020.01)

(52) Cooperative Patent Classification (CPC):
G01S 7/484; G01S 7/4863; G01S 17/02;
G01S 17/04

(86) International application number:
**PCT/CN2023/073368**

(87) International publication number:
**WO 2023/185227 (05.10.2023 Gazette 2023/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **02.04.2022   CN 202210349756**

(71) Applicant: **Hesai Technology Co., Ltd.
Shanghai 201815 (CN)**

(72) Inventors:
• **LIANG, Feng
  Shanghai 201815 (CN)**
• **XIANG, Shaoqing
  Shanghai 201815 (CN)**

(74) Representative: **Fish & Richardson P.C.
Highlight Business Towers
Mies-van-der-Rohe-Straße 8
80807 München (DE)**

(54) **DETECTION METHOD OF LASER RADAR, AND COMPUTER STORAGE MEDIUM AND LASER RADAR**

(57)     A detection method for a LiDAR is provided. The LiDAR includes multiple detection channels. Each detection channel includes at least one laser and at least one detector. The laser of each detection channel is configured to emit a sequence of detection pulse including at least one detection pulse. The detection method includes: at S11, determining whether there is an object within a first distance, based on a previous detection result, wherein the first distance is not greater than 1/10 of a maximum detectable distance of the LiDAR; at S12, dynamically changing a code of a sequence of detection pulse of the detection channel , based on the determining result; at S13, controlling a laser of the detection channel to emit a detection pulse based on the code; at S14, receiving an echo of the detection pulse reflected by the object, and determing information of the object based on the echo . In this disclosure, by analyzing the previous detecting result to predetermine whether an object is continuously detected within a medium or near distance, the code of the sequence of detection pulse is dynamically changed, so that capabilities of distance measurement and anti-interference are both considered.

**10**

| | |
|---|---|
| Determine whether there is object within first distance based on previous detecting result | S11 |
| Dynamically change code of sequence of detection pulse of detection channel based on determining result | S12 |
| Control laser of detection channel to emit detection pulse based on code | S13 |
| Receive echo of detection pulse reflected by object, and determine information of object based on echo | S14 |

**Fig. 4**

EP 4 506 729 A1

## Description

This application claims priority to Chinese Patent Application No. 202210349756.1, filed on April 2, 2022 and entitled **"DETECTION METHOD FOR LIDAR, COMPUTER STORAGE MEDIUM AND LIDAR"** to the China National Intellectual Property Administration, the disclosure of which is herein incorporated by reference in its entirety.

## TECHNICAL FIELD

This disclosure relates to the field of photoelectric detection technologies and, in particular, to a detection method for a LiDAR ("Light Detection And Ranging"), a computer storage medium and a LiDAR.

## BACKGROUND

A LiDAR, as a three-dimensional measurement system, realizes three-dimensional measurement coverage of a measurement area through acquired point cloud. The Lidar based on Time of Flight ("ToF") ranging specifically calculates a distance of an object based on a time difference between emission of a detection pulse and reception of an echo reflected by the object.

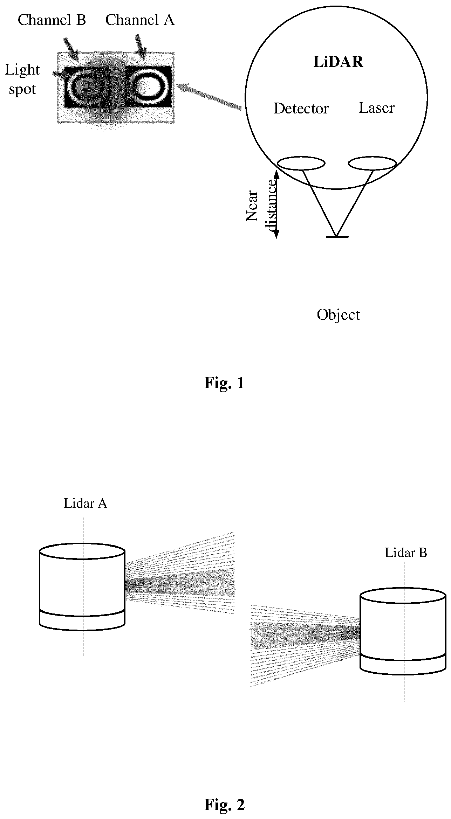

For a high harness and high resolution LiDAR, it may perform scanning detection by way of simultaneous light emission and reception in multiple channels, which, sometimes, can cause a crosstalk problem. Crosstalk refers to signal interference among different channels of the same LiDAR. Fig. 1 shows a schematic diagram of signal crosstalk among channels of a LiDAR. In FIG. 1, the LiDAR is a paraxial optical path. A laser of a channel A emits light for detection. The light is reflected when encountering an object within a relatively near distance, and a light spot deviates. In addition to light incident to a detector of the channel A, a channel B can also receive a strong echo, and even most echo light spots may be reflected to the channel B. Then the channel B processes the light based on the echo and can mistakenly consider that it has detected a real object. Therefore, this part of energy is the crosstalk for the channel B.

Additionally, signal interference can also be formed among different LiDARs. Fig. 2 shows a schematic diagram of signal interference among different LiDARs. For example, a detection pulse emitted by a certain channel of a LiDAR A enters a certain channel of a LiDAR B by way of direct incidence or reflection, that is, the channel of the LiDAR B detects a detection pulse or an echo of the LiDAR A, causing interference to the LiDAR B.

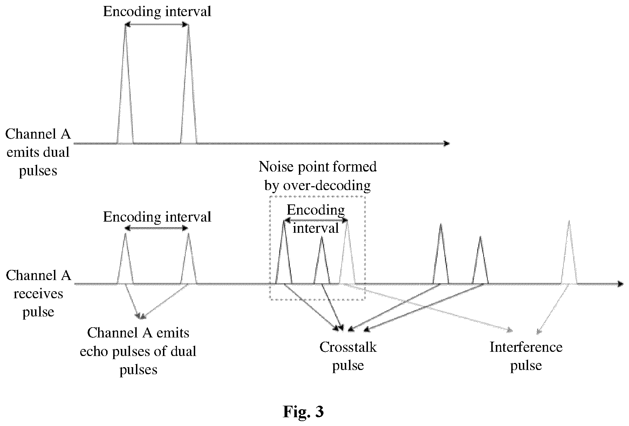

When the crosstalk or interference occurs, the number of pulses within a receiving time window can be increased, which easily results in a combination of over-decoding pulses. Fig. 3 shows a schematic diagram of over-decoding of a LiDAR. The channel A adopts dual pulse encoding for emission. The channel A receives echo pulses of dual pulses reflected by the object. However, there are still four crosstalk pulses and two interference pulses within the receiving window of the channel A. The greater the number of pluses is, the easier the combination of over-decoding pluses occurs. That is, in a case that the echo pulse is identified based on an encoding interval, the real echo pulse reflected by the pulse emitted by the channel A after encountering the object is identified, and one crosstalk pulse and one interference pulse accord with the encoding interval are regarded as echo pulses to form a noise point, that is a point not corresponding to the real object. Therefore, it is beneficial to improve capabilities of anti-crosstalk and anti-interference of the LiDAR, thereby improving accuracy of LiDAR detection. The content of the background merely discloses technologies known by inventors and does not necessarily represent the prior art in this field.

## SUMMARY

In view of existing one or more disadvantages, this disclosure relates to a detection for a LiDAR, where the LiDAR includes multiple detection channels, each detection channel includes a least one laser and at least one detector, the laser of each detection channel is configured to emit a sequence including at least one detection pulse, and the detection method includes:

> S11: determining whether there is an object within a first distance based on a previous detection result, where the first distance is not greater than 1/10 of a maximum detectable distance of the LiDAR;
> S12: dynamically changing a code of a sequence of detection pulse of the detection channel based on a determining result;
> S13: controlling a laser of the detection channel to emit the detection pulse based on the code; and
> S14: receiving an echo of the detection pulse reflected by the object, and determining information of the object based on the echo.

Based on an aspect of this disclosure, the step S11 includes: determining whether there is the object within the first distance based on one or more of the following information:

> a previous detection result of the detection channel; and
> a previous detection result of a detection channel adjacent to the detection channel in time or space.

Based on an aspect of this disclosure, the step S12 includes: encoding one or more of the power of the detection pulse or a pulse interval of the detection pulse or the number of detection pulses in the sequence of detection pulse emitted by the laser of the detection channel based on the determining result.

Based on an aspect of this disclosure, the step S12 further includes: in a case that there is an object within the first distance, increasing the number of the detection pulses in the sequence and decreasing the power of at least one detection pulse.

Based on an aspect of this disclosure, the step S12 further includes: in a case that there is no object within the first distance, decreasing the number of the detection pulses in the sequence or using a single detection pulse, and increasing the power of the at least one detection pulse in the sequence.

Based on an aspect of this disclosure, total optical power of the sequence of the detection channel or total electrical power consumption of the detection channel is lower than a threshold.

Based on an aspect of this disclosure, the total optical power of sequences to one detection channel is substantially equal, or the total optical power for each sequence of each detection channel of the LiDAR is substantially equal.

Based on an aspect of this disclosure, the total electrical power consumption to one detection channel is substantially equal, or the total electrical power consumption of each detection channel of the LiDAR is substantially equal.

This disclosure further relates to a computer storage medium, including computer executable instructions stored therein, where when the computer executable instructions are executed by a processor, the detection method described above is implemented.

This disclosure further relates to a LiDAR, including:

> multiple lasers configured to emit a sequence of a detection pulse;
> multiple detectors configured to receive an echo reflected by a target object, where the multiple lasers and the multiple detectors form multiple detection channels, each detection channel includes at least one laser and at least one detector, and the laser of each detection channel is configured to emit the sequence including at least one detection pulse; and
> a controller apparatus connected to the multiple lasers and the multiple detectors, where the controller apparatus is configured to:

>> determine whether there is an object within a first distance based on a previous detection result; where the first distance is not greater than 1/10 of a maximum detectable distance of the LiDAR;
>> dynamically change a code of a sequence of the detection pulse of the detection channel based on a determining result;
>> control the laser of the detection channel to emit the detection pulse based on the code; and
>> receive an echo of the detection pulse reflected by the object, and determine information of the object based on the echo.

Based on an aspect of this disclosure, the controller apparatus is further configured to: determine whether there is the object within the first distance based on one or more of the following information:

> a previous detection result of the detection channel; and
> a previous detection result of a detection channel adjacent to the detection channel in time or space.

Based on an aspect of this disclosure, the controller apparatus is further configured to: encode one or more of power of the detection pulse or a pulse interval of the detection pulse or the number of detection pulses in the sequence of the detection pulse emitted by the laser of the detection channel based on the determining result.

Based on an aspect of this disclosure, the controller apparatus is further configured to: in a case that there is the object within the first distance, increase the number of the detection pulses in the sequence and decrease the power of at least one detection pulse.

Based on an aspect of this disclosure, the controller apparatus is further configured to: in a case that there is no object within the first distance, decrease the number of the detection pulses in the sequence or use a single detection pulse, and increase the power of the at least one detection pulse in the sequence.

Based on an aspect of this disclosure, total optical power of the sequence of the detection channel or total electrical power consumption of the detection channel is lower than a threshold.

Based on an aspect of this disclosure, the total optical power of sequences to one detection channel is substantially equal, or the total optical power for each sequence of each detection channel of the LiDAR is substantially equal.

Based on an aspect of this disclosure, the total electrical power consumption to one detection channel is substantially equal, or the total electrical power consumption of each detection channel of the LiDAR is substantially equal.

In this disclosure, by analyzing the previous detection result determine whether there is an object within a medium or near distance in the current detection. In a case that the total optical power or the total electrical power consumption remains unchanged, the code of the sequence of the detection pulse is dynamically changed, so that capabilities of distance measurement and anti-interference are both considered.

## BRIEF DESCRIPTION OF THE DRAWINGS

Drawings, which form a part of this disclosure, are intended to provide further understanding of this disclosure, and illustrative embodiments of this disclosure and description thereof are used to explain this disclosure, but do not constitute undue limitations on this disclosure. In the drawings:

Fig. 1 shows a schematic diagram of signal crosstalk among channels of a LiDAR.

Fig. 2 shows a schematic diagram of signal crosstalk among LiDARs.

Fig. 3 shows a schematic diagram of over-decoding of a LiDAR.

Fig. 4 shows a flowchart of a detection method for a LiDAR, provided in embodiments of this disclosure.

Fig. 5 shows a schematic diagram of arrangement of detection channels of a LiDAR, provided in embodiments of this disclosure.

Fig. 6 shows a schematic diagram of different detection angles, provided in embodiments of this disclosure.

Fig. 7 shows a schematic diagram where a LiDAR emits a detection beam and receives an echo using triple pulse encoding.

Figs. 8A-8C show schematic diagrams where a LiDAR changes a code of a detection pulse, provided in embodiments of this disclosure.

Fig. 9 shows a flowchart of a detection method for a LiDAR, provided in embodiments of this disclosure.

Fig. 10 shows a schematic structural diagram of a LiDAR, provided in a embodiments of this disclosure.

**DETAILED DESCRIPTION**

In the following, merely some exemplary embodiments are briefly described. As can be understood by those skilled in the art, the description of embodiments may be modified in various ways without departing from the spirit or scope of this disclosure. Accordingly, drawings and description are considered to be exemplary rather than restrictive in nature.

In this disclosure, it should be understood that an orientation or positional relationship indicated by terms such as "center," "longitudinal," "transverse," "length," "width," "thickness," "upper," "lower," "front," "rear," "left," "right," "vertical," "horizontal," "top," "bottom," "inner," "outer," "clockwise," "counterclockwise," is based on the orientation or positional relationship shown in drawings, and are merely for convenience of describing this disclosure and simplifying the description, rather than indicate or imply that an apparatus or an element referred to must have a specific orientation, or be configured and operated in a specific orientation, and therefore should be understood as a limitation on this disclosure. In addition, terms "first" and "second" are merely for descriptive purposes and should be understood as indicating or implying relative importance, or implicitly indicating the number of indicated technical features. Therefore, features limited with "first" and "second" may explicitly or implicitly include one or more features. In the description of this disclosure, "a plurality of", "multiple" means two or more, unless otherwise specifically limited.

In the description of this disclosure, it should also be noted that unless otherwise specified and limited, terms "installing," "coupling," and "connecting" should be understood in a broad sense. For example, it can be fixedly connecting, detachably connecting, or integrally connecting; it can be mechanically connecting or electrically connecting, or can be communicated with each; and it can be directly connecting or indirectly connecting through an intermediate medium, or it can be communication within two elements or an interaction relationship between two elements. For those ordinary skilled in the art, specific meanings of the above terms in this disclosure may be understood based on a specific situation.

In this disclosure, unless otherwise specified and limited, a first feature being located "above" or "below" a second feature may involve direct contact between the first feature and second feature, or may involve that the first feature and second feature are not in direct contact with each other but in contact through additional features between them. Moreover, the first feature being located "over," "above," or "on" the second feature may involve that the first feature is directly above and obliquely above the second feature, or merely represent that the level of the first feature is higher than that of the second feature. The first feature being located "under," "below," or "beneath" the second feature may involve that the first feature is directly below and obliquely below the second feature, or merely represent that the level of the first feature is lower than that of the second feature.

The following disclosure provides many different embodiments or examples for implementing different structures of this disclosure. To simplify this disclosure, components and settings of specific examples are described below. Of course, they are merely examples and are not intended to limit this disclosure. In addition, at least one of reference numerals or reference letters may be repeated in different examples in this disclosure, and this repetition is for a purpose of simplicity and clarity, and does not in itself represent a relationship between at least one of various implementation manners or settings discussed. In addition, this disclosure provides examples of various specific processes and materials, but at least one of application of other processes or use of other materials may be conceived by those ordinarily skilled in the art.

This disclosure provides a detection method for a LiDAR. The LiDAR includes multiple lasers and multiple detectors. These transceiver devices form multiple detection channels. Each detection channel covers a certain sub field of view range. All detection channels jointly form a field of view of the LiDAR, where the laser of each detection channel may emit either multiple pulses or a single pulse. In a case that each horizontal sub field of view (a field of view perpendicular to the LiDAR or a direction of a rotation axis of a rotatable part in the LiDAR) is detected, whether there is an object within a preset relatively near distance range in a channel direction at this time may be determined based on a previous detection result, and a code of a sequence of detection pulse of the detection channel is dynamically changed based on a determining result for ranging this time. For example, in a case that there is an object within the near distance, complexity of the code is raised, and in a case that there is no object within the near distance, power of a pulse is improved, so that performance of distance measurement and capabilities of anti-interference and anti-crosstalk of a LiDAR are both considered.

Preferred embodiments of this disclosure are described below with reference to drawings. It should be understood that the preferred embodiments described herein are merely intended to illustrate and explain this disclosure, but not to limit this disclosure.

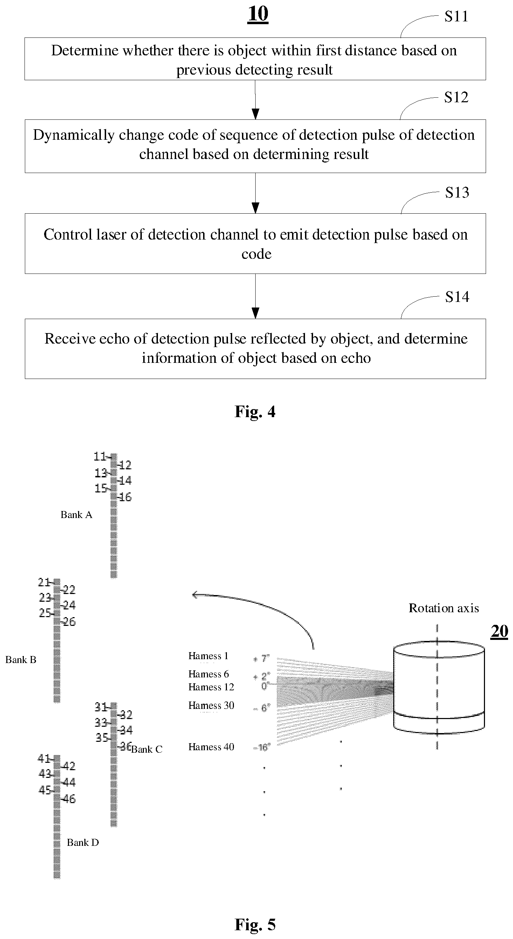

Fig. 4 shows a flowchart of a detection method for a LiDAR, provided in an embodiment of this disclosure. Fig. 5 shows a schematic diagram of arrangement of lasers of a LiDAR, provided in an embodiment of this disclosure. In Fig. 5, a LiDAR 20 may include 64 lasers, which are respectively lasers 11, 12, 13, or the like. These lasers and corresponding detectors form multiple detection channels, commonly known as harnesses of the LiDAR, for example, harnesses 1-40. Laser emitted by each laser, after passing through an emitting lens group, faces in different directions when emitted from the LiDAR. For example, in Fig. 5, an exit direction of a harness 1 is +7°, the exit direction of a harness 40 is -16°, and the exit direction of a harness 12 is 0°.

Additionally, the laser of each channel and the detector of the same channel have a common sub field of view. Specifically, in a case that a laser of a certain channel emits a detection pulse, a corresponding detector may receive an echo of the detection pulse which is reflected by an external object and returns to the LiDAR, and further determines information such as distance and reflectivity of the object based on the echo. Therefore, detection at one time in an orientation (which may specifically include a horizontal orientation and a vertical orientation, with the vertical orientation being an orientation parallel to the rotation axis of the LiDAR, and the horizontal orientation being an orientation perpendicular to the rotation axis of the LiDAR) where the detection channel is located is completed. Next, this transceiving detection process is then repeated in the next orientation to determine a detection result of the object in the next orientation. To repeat like this, cloud point information of the entire detection field of view of the LiDAR may be formed, thereby realizing three-dimensional detection of a surrounding environment.

It should be noted that each detection channel may include at least one laser and at least one detector. The number of detection channels is the number of minimum addressable channels. The lasers and the detectors may be configured in a proportion of 1: 1, that is, one laser and one detector form one detection channel. Then, in this case, the number of the lasers or the detectors is the number of the harnesses of the LiDAR. As shown in Fig. 5, each laser and its corresponding detector form one detection channel. Therefore, the concept of the laser, the channel, and the harness are consistent in this embodiment. A laser 11 and its corresponding detector may be understood to form a channel 11. However, there is still a case that multiple detectors share one laser, that is, a ratio of the number of the lasers to the number of the detectors is 1: N, or there is a case that multiple lasers share one detector, that is, a ratio of the number of the lasers to the number of the detectors is N: 1. The number of the harnesses or the number of the channels of the entire LiDAR in this two cases is N = max (NT, NR), where NT is the number of emitting channels, NR is the number of receiving channels, that is, the number of the harnesses or the number of the channels of the entire LiDAR is a number of minimum distinguishable units in an emitting terminal and a receiving terminal.

Continuously referring to Figs. 4 and 5, all lasers of the LiDAR may be divided into four groups: Bank A, Bank B, Bank C, and Bank D. Among them, the Bank A includes all lasers with 1x label, where x is a positive integer, for example, a laser 11, a laser 12, a laser 13, or the like; the Bank B includes all lasers with 2x label, for example, a laser 21, a laser 22, a laser 23, or the like; the Bank C includes all lasers with 3x label, for example, a laser 31, a laser 32, a laser 33, or the like; and the Bank D includes all lasers with 4x label, for example, a laser 41, a laser 42, a laser 43, or the like.

To reduce crosstalk interference and improve accuracy of cloud point detection, for LiDAR with multiple harnesses, in a case that detection is performed in any horizontal orientation, all vertical channels for detection may perform detection in batches by turns. For some of the channels for detection in each batch, the channels arranged for detection in the same batch are relatively far from one another in terms of a physical interval. For example, the channels for parallel detection in the first batch may select the laser 11, the laser 21,the laser 31, and the laser 41. The channels for parallel detection in the second batch may select the laser 14, the laser 24, the laser 34, and the laser 44. Moreover, since the lasers located in the same group select to emit light at different times, they may be driven by a same driver unit, so that the number of driver units may be decreased, and therefore, the volume of the entire LiDAR may further be reduced while the power of the entire LiDAR is reduced.

Additionally, the laser of each detection channel is configured to emit a sequence including at least one detection pulse during detection at one time (generating one point in the point cloud), that is, each laser may emit either a single pulse or multiple pulses. For detection at one time, the detection method 10 includes steps S11-S14, specifically as follows.

At step 11, determine whether there is an object within a first distance based on a previous detection result, where the first distance is not greater than 1/10 of a maximum detectable distance of the LiDAR 20.

In a case that an echo of a certain channel is very strong, for a channel adjacent to the certain channel in space, stray light generated by the current detection channel is also strong enough, so that the crosstalk to the adjacent channel is formed. That is, in a case that the echo is strong enough, probability of the crosstalk among channels is relatively high. Under normal circumstances, in a case that the LiDAR hits an object with relatively high reflectivity within a medium or near distance, the echo can be very strong (within a certain distance range, echo strength of the LiDAR is inversely proportional to square of the distance). Therefore, the crosstalk occurs more frequently in a case that there are objects within the medium or near distance. The medium or near distance is set in step S11, that is, the first distance, which may be not greater than 1/10 of the maximum detectable distance of the LiDAR 20. The first distance considers not only a scenario where the crosstalk occurs, but also optical power accord with human eye safety and electrical power consumption of the LiDAR. The optical power and the electrical power consumption will be further described.

Based on a preferred embodiment of this disclosure, the step S11 includes: determining whether there is the object within the first distance based on one or more of the following information:

    a previous detection result of the detection channel; and
    a previous detection result of a detection channel adjacent to the detection channel in time or space.

In some embodiments, whether there is an object at the current time is determined based on a ranging result at a previous moment of each detection channel. For example, the detection channel 12 in Fig. 5 detects an object in an orientation at a time T1, and the object is located within the first distance. It may be determined that the detection channel 12 may also detect the object within the first distance at a time T2 based on the detection result and the object is relatively continuous by default (the size of the object is usually much larger than a distinguishable interval of the LiDAR between two continuous detections). Among them, the previous moment may include one or more moments at which the detection has been completed before the current moment.

In some other embodiments, whether there is an object at the current time is predicted based on the detection result at the previous moment of each detection channel and a channel adjacent to the detection channel. Referring to Fig. 5, the detection channel may be purely based on either the detection result in a previous horizontal orientation of the channel or that of an adjacent channel in a perpendicular direction. For example, the detection channel 13 may be based on the detection results of the adjacent detection channel 11 and detection channel 12. For another example, based on the perpendicular channel in an adjacent light-emitting time sequence, for example, in terms of the light-emitting time sequence, the lasers of the detection channels 12, 22, 32, and 42 emit the light in parallel, then, the lasers of the channels 13, 23, 33, and 43 emit the light in parallel, and next the lasers of the channels 14, 24, 34, and 44 emit the light in parallel. After all, the channels physically apart as far as possible emit the light in parallel to reduce the probability of the crosstalk. Therefore, the channel 12 may determine whether there is the object within the first distance based on the detection result of the detection channel 22 in the adjacent light-emitting time sequence.

In some other embodiments, for example, the detection channel 12 in Fig. 5 does not detect any object in a horizontal orientation $\theta_i$, but the adjacent detection channels 13 and 14 detect an object in the horizontal orientation $\theta_i$, and the object is located within the first distance. Then, the type of the object may be determined based on the point cloud and object identification, and furthermore, determine whether the detection channel 12 can detect the object within the first distance in a horizontal orientation $\theta_{i+1}$ based on the type, size, and speed of the object. Among them, the previous moment may include one or more moments at which the detection has been completed before the current moment. The adjacent channel may include channels adjacent to the current channel or channels arranged adjacently to the current channel in a group of parallel light-emitting channels.

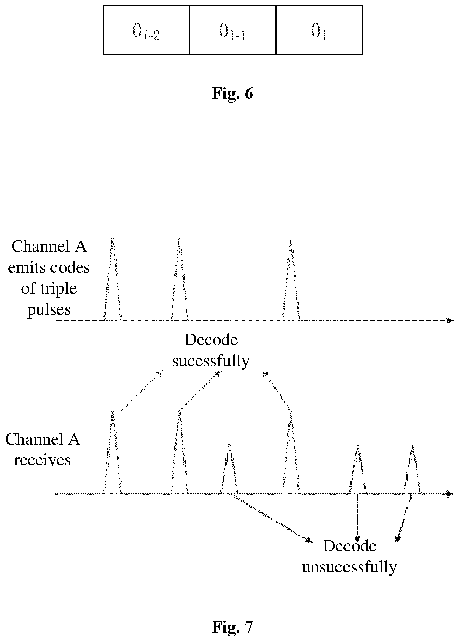

In some other embodiments, whether the channel may detect the object at a current detection angle is predicted based on the detection result of the detection channel in multiple detection angles. Among them, the detection angle is, for example, a horizontal angle, that is, an angle range which may be detected by the LiDAR in the horizontal direction. For example, a mechanical LiDAR rotates one revolution at 360°, so that a horizontal field of view range is 360°. In a cloud point image outputted by the LiDAR, an included angle between two adjacent points on a plane perpendicular to the rotation axis is a horizontal angle resolution, which is, for example, 0.1°. As shown in Fig. 6, a horizontal angle $\theta_{i-2}$ is 0°, a horizontal angle $\theta_{i-1}$ is 0.1°, and the horizontal angle $\theta_i$ is 0.2°. In other embodiments, a horizontal included angle between the adjacent points in the point cloud may also be determined non-uniformly. For example, the horizontal angle $\theta_{i+2}$ is 0°, the horizontal angle $\theta_{i+1}$ is 0.3°, and the horizontal angle $\theta_i$ is 0.2°. Whether the channel may detect the object within the first distance in the horizontal angle $\theta_i$ is predicted based on the detection result of each channel in two adjacent horizontal angles $\theta_{i-2}$ and $\theta_{i-1}$. For example, in a case that the detection channel 12 in Fig. 5 detects the object in the horizontal angle $\theta_{i-2}$ and also detects the object in the horizontal angle $\theta_{i-1}$, and the object is located within the first distance, it is predicted that the detection channel 12 can also detect the object within the first distance in the horizontal angle $\theta_i$.

In some other embodiments, combined with technologies of object identification (e.g., whether the object is a static object, a slow speed object or a fast moving object) and distance prediction, by integrating the previous ranging result, a ranging result of the detection pulse to be emitted is predicted, and whether there is the object within the first distance at the current time is determined based on the predicting result.

The above embodiments exemplarily illustrates how to determine whether there is an object within the first distance based on the previous detection result, and the following steps shall be further processed based on a determining result.

At step S12, a code of a sequence of detection pulse of the detection channel is dynamically changed based on a determining result.

It is found by inventors through research that the crosstalk and the interference may be inhibited to a certain extent using more encoding pluses. Fig. 7 shows a schematic diagram where a LiDAR emits a detection beam and receives an echo using triple pulse encoding, where a channel A emits a sequence of triple encoding pulses , and receives the returned echoes and decodes them. A pulse group with an encoding feature (in Fig. 7, a pulse interval is used for encoding) accord with the emitted detection pulse interval is found from all received pulses, so as to guarantee that the received pulse is emitted by its own channel, and interference pulses from other channels or other LiDARs cannot be decoded due to mismatch of the encoding feature. It may be seen by comparing with Fig. 3, by adopting the encoding mode in Fig. 7, interference may be reduced to a certain extent, so that an interference noise point is prevented from being formed.

Thus it may be seen that the more the encoding pulses are, the more complex and unique may the encoding feature be determined, and the stronger the capabilities of anti-interference and anti-crosstalk are. Moreover, the more the encoding pulses are, the smaller power of a single detection pulse due to a limitation of total power, resulting in a weakened capability of distance measurement. Therefore, based on the embodiments, rules for encoding a pulse may be determined reasonably based on a determined result to balance the capabilities of anti-interference and anti-crosstalk and the capability of distance measurement of the entire LiDAR.

In specific implementation, within the medium or near distance, the echo received by a detection channel is strong, so that the crosstalk easily occurs among the detection channels. Within a far distance, the echo itself is not strong. Relatively, the crosstalk among the detection channels is relatively less likely to occur. Therefore, to improve the capabilities of anti-interference and anti-crosstalk within the medium or near distance, a sequence of detection pulses with different codes based on the determining result is proposed. That is, in a case that it is determined that there is an object within the first distance at step S11, a more complicated encoding may be applied to the detection pulse. For example, increase the number of the detection pulses, so as to raise the capability of anti-interference of the LiDAR. In a case that it is determined that there is no object within the medium or near distance, the code of the detection pulse may be further simplified. For example, decrease the number of the detection pulses , and increase the power of the single pulse, especially the pulse for ranging, so that the capability of distance measurement of the LiDAR may be improved.

Based on a preferred embodiment of this disclosure, the step S12 further includes: encoding one or more of a power or a pulse interval of the detection pulse, or the number of detection pulses, in the sequence of the detection pulses emitted by the laser of the detection channel based on the determining result.

A multiple pulse encoding technology may inhibit the crosstalk and the interference, thereby improving the capabilities of anti-crosstalk and anti-interference. Therefore, adjust the codes of the sequence of detection pulse emitted by the laser 21 of the detection channel, based on whether there is an object within the first distance. An adjustment includes: adjusting any one or more of the power of the detection pulse, or the pulse interval of the detection pulse, or the number of detection pulses in the sequence of detection pulse.

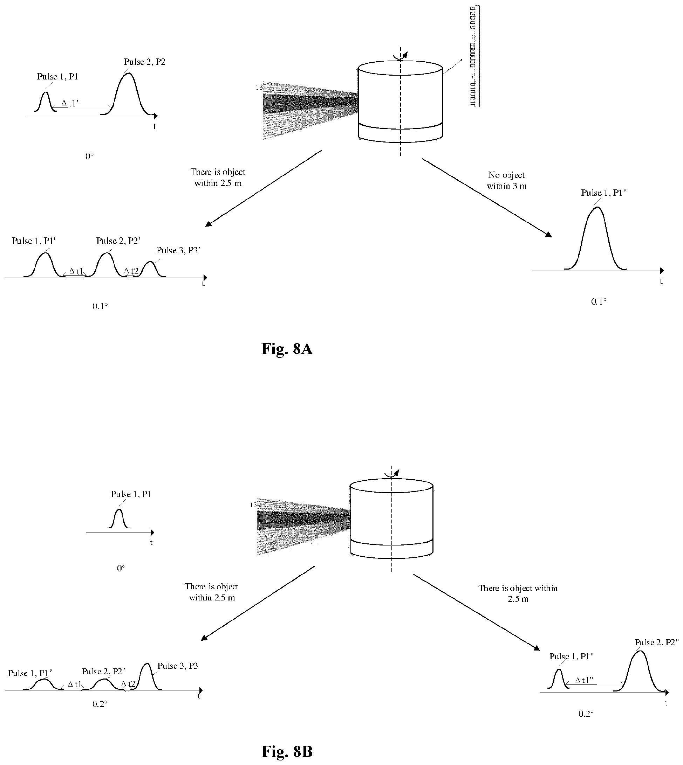

Fig. 8A shows a schematic diagram where a LiDAR changes a code of a detection pulse, provided in embodiments of this disclosure. A detection channel 13 is ready to detect in a horizontal angle 0.1°, by checking out a detection situation in the horizontal angle 0° in advance:emitting dual pulses in the horizontal angle 0° and determine whether there is an object detected within the first distance (e.g., 3 meters) in the horizontal angle 0°. If an object is detected at a position of 2.5 meters, the code of the pulse is adjusted in the horizontal angle 0.1°. Taking changing the number of the detection pulses as an example, the detection channel 13 may be changed to emit triple pulses and reduce the power of each single pulse. The greater the number of the encoding pulses is, the stricter the decoding needs to be, and the stronger the capabilities of anti-interference and anti-crosstalk are.

Additionally, because the first distance is a distance relatively close to the LiDAR, the echo itself is strong. Therefore, even if the power of each single pulse emitted is reduced, an object at a near distance may still be detected. Other detection channels may be changed similarly to consider both the capabilities of anti-crosstalk and anti-interference and the capability of ranging of the LiDAR. In other embodiments, the detection channel 13 may continuously emit the dual pulses in the horizontal angle 0°, but change the time interval between the dual pulses or the power of the detection pulse to improve the capabilities of anti-crosstalk and anti-interference.

Taking changing the number of the detection pulses as an example, in a case that the total power remains unchanged, the greater the number of the encoded detection pulses is, the stronger the capabilities of anti-crosstalk and anti-interference are, but the weaker the capability of distance measurement is relatively. To balance the capabilities of anti-crosstalk and anti-interference and the capability of distance measurement, in a case that there is an object within the first distance, more detection pulses may be used, and otherwise, few detection pulses may be used. However, more detection pulses and few detection pulses both should fit the capability of distance measurement. For example, the capability of distance measurement of the LiDAR may be limited by the total optical power. Therefore, if the total optical power is too high, there is a probability that the total optical power exceeds a threshold of the human eye safety. To guarantee that the total optical power meets needs on the threshold of the human eye safety, the greater the number of the detection pulses emitted by the LiDAR is, the less the power allocated to each detection pulse is. In a case to change the power of the detection pulse to encode, the total optical power should also meet the needs on the threshold of the human eye safety.

Based on an embodiment of this disclosure, the step S12 further includes: in a case that there is an object within the first distance, increasing the number of the detection pulses in the sequence and decreasing the power of at least one detection pulse.

Typically, to maximize the capability of distance measurement, the total optical power of the sequence of detection pulse may be substantially equal to the total optical power meeting the threshold of the human eye safety. A basic principle of estimating the human eye safety is as follows. For all time periods in a time reference, optical radiations entering pupils all do not exceed a reachable emission limit at all estimated positions (including a viewing distance) and in a focusing state of eyes.

To improve the capabilities of anti-crosstalk and anti-interference and meet needs that the total optical power does not exceed the threshold, it is beneficial to reduce the power of at least one detection pulse while increasing the number of the detection pulses in the sequence.

Continuously referring to Fig. 8A, the detection channel 13 is ready to detect in the horizontal angle 0.1°, by checking out the situation detected in the horizontal angle 0°: Emitting the dual pulses in the horizontal angle 0°, where the optical power of a pulse 1 is P1, and the optical power of a pulse 2 is P2. If it is determined that an object is detected within the first distance, for example, a position of 1.8 meters, in the horizontal angle 0°, the detection channel 13 is changed to emit triple pulses in the horizontal angle 0.1°, where the optical power of a pulse 1' is P1', the optical power of a pulse 2' is P2', and the optical power of a pulse 3' is P3'. By reducing the optical powers of the pulse 1' and the pulse 2', that is, P1' < P1 and P2' < P2, total optical power P1' + P2' + P3' does not exceed the threshold of the human eye safety. The optical power of the pulse 1' and the optical power of the pulse 1 may also be kept identical, the optical power of the pulse 2' is reduced and the pulse 3' is emitted with relatively low power, so that the total optical power does not exceed the threshold of the human eye safety.

Based on an embodiment of this disclosure, the step S12 further includes: in a case that there is no object within the first distance, decreasing the number of the detection pulses in the sequence or using a single detection pulse, and increasing the power of the at least one detection pulse in the sequence.

Continuously referring to Fig. 8A, the detection channel 13 is ready to detect in the horizontal angle 0.1°, by and the detection condition in the horizontal angle 0° is viewed first. The dual pulses are emitted in the horizontal angle 0°, where the optical power of the pulse 1 is P1, and the optical power of the pulse 2 is P2. If it is determined that the object is detected within the first distance, for example, a position of 3 meters, in the horizontal angle 0°, the detection channel 13 is changed to emit the single pulse in the horizontal angle 0.1°. Moreover, the optical power of A pulse 1" is increased to P1", and the optical power P" meets the needs on the threshold of the human eye safety.

Referring to Fig. 8B, another embodiment of changing the code of the pulse is shown. As shown in Fig. 8B, the detection channel 13 is ready to detect in the horizontal angle 0.2°, by checking out the situation detected in the horizontal angle 0°first: a very small single pulse is emitted in the horizontal angle 0°, where the optical power of the pulse 1 is P1. The echo is received, determining that there is an object detected within the first distance, for example, a position of 2.5 meters, in the horizontal angle 0°. In the horizontal angle 0.2°, as shown in a left part of the figure, the detection channel 13 may be adjusted to emit triple pulses, where the power of the pulse 1 is P1', the power of the pulse 2 is P2', and the power of the pulse 3 is P3 > P1. By taking the pulse 3 as the ranging pulse, the above adjustment by increasing the power of the ranging pulse after moving to the current orientation has better capabilities of anti-crosstalk and anti-interference while maintaining relatively low power consumption because pulse power used in the previous horizontal orientation is relatively low. In another embodiment, as shown in a right part of the figure, the detection channel 13 may be adjusted to emit dual pulses, where the power of the pulse 1 is P1", and the power of the pulse 2 is P2".

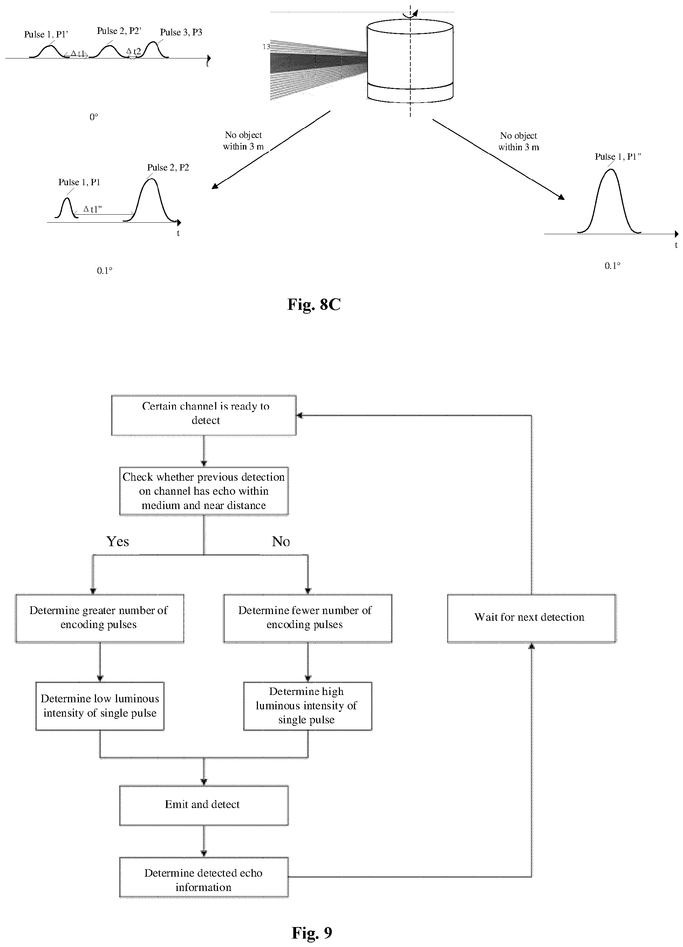

Fig. 8C shows another embodiment of changing the code of the pulse. As shown in Fig. 8C, the detection channel 13 is ready to detect in the horizontal angle 0.1°, by checking out the situation detected in the horizontal angle 0°first: the triple pulses are emitted in the horizontal angle 0°, where the optical power of the pulse 1 is P1', the optical power of the pulse 2 is P2', and the optical power of the pulse 3 is P3. After the echo is received and analyzed, it is determined that there is no object detected within the first distance, for example, a position of 3 meters, in the horizontal angle 0°. In the horizontal angle 0.1°, as shown in the left part of the figure, the detection channel 13 is changed to emit the dual pulses, and the optical power of a ranging pulse 2 is increased to P2 at the same time. Also as shown in the right part of the figure, the detection channel 13 is changed to emit a single pulse which has relatively high optical power P1" with P1" > P2.

Therefore, capability of distance measurement of the entire LiDAR may be improved.

It is specifically illustrated through the above embodiments that based on a determining result whether there is the object, the code of the sequence of detection pulse may be dynamically changed to balance the capabilities of anti-crosstalk and anti-interference and the capability of distance measurement.

It should be noted that the LiDAR may prestore some encoding information of the sequence of detection pulse, and the encoding information of the sequence of detection pulse may include the distance and the reflectivity Furthermore, a proper code is selected from the prestored sequence of detection pulse,by determining information of the distance and the reflectivity of the object detected by the detection channel. In specific implementation, for example, different dual pulses, triple pulses, or five pulses are prestored, and different codes are applicable to different application scenarios. An optimum code of the sequence of the detection pulse is selected based on the detection result.

Additionally, total optical power $W_{optical}$ which guarantees the human eye safety is one of factors limiting the capability of distance measurement of the LiDAR, and total electrical power consumption $W_{electrical}$ of the LiDAR is one of the factors too. To guarantee that the total optical power $W_{optical}$ and the total electrical power consumption $W_{electrical}$ are within a certain range, the greater the number N of the encoding pulses emitted by the LiDAR is, the less energy $P_N$ allocated to each pulse is, which meets the following relationship:

$$N \times P_N = \min (W_{optical}, W_{electrical})$$

The greater the number N of the encoding pulses is, the lower the probability that the pulse is mistakenly decoded is, and the stronger the capabilities of anti-crosstalk and anti-interference of the LiDAR are. In addition, the capabilities of extreme ranging or distance measurement of the LiDAR (a farthest distance which may be detected by the LiDAR) is positively correlated to light intensity $P_N$ of each pulse or the pulse for ranging. Therefore, the higher the light intensity $P_N$ of each pulse or the pulse for ranging is, the stronger the capability of distance measurement of the LiDAR is. Therefore, limited by the total optical power $W_{optical}$ and the total power consumption $W_{electrical}$, it can be seen that the capabilities of anti-crosstalk and anti-interference and the capability of distance measurement are counterbalances to each other. Specifically, the greater the number N of the encoding pulses is, the stronger the capabilities of anti-crosstalk and anti-interference are, but the weaker the capability of distance measurement is. The fewer the number N of the encoding pulses is, the weaker the capabilities of anti-crosstalk and anti-interference are, but the stronger the capability of distance measurement is.

Based on an embodiment of this disclosure, the total optical power $W_{optical}$ of the sequence of the defection channel or the total electrical power consumption $W_{electrical}$ of the detection channel is lower than a threshold.

Continuously referring to Fig. 8A, the detection channel 13 emits dual pulses in the horizontal angle 0°, where the optical power of the pulse 1 is P1, and the optical power of the pulse 2 is P2. In a case that an object is detected within the first distance, for example, a position of 2.5 meters, in the horizontal angle 0°, it is determined that the detection channel 13 can also detect the object in the horizontal angle 0.1°. To improve the capabilities of anti-crosstalk and anti-interference, the sequence of detection pulse of the detection channel 13 in the horizontal angle 0.1° is encoded. For example, triple pulses are emitted, where the optical power of the pulse 1' is P1', the optical power of the pulse 2' is P2', and the optical power of the pulse 3' is P3'. If the capability of distance measurement of the LiDAR is limited to the threshold of the total optical power, in a case that P1' + P2' + P3' = P1 + P2, the capabilities of anti-crosstalk and anti-interference and the capability of distance measurement both are considered without additionally increasing the optical power.

For another example, the detection channel 13 emits dual pulses in the horizontal angle 0°, where the optical power of the pulse 1 is P1, and the optical power of the pulse 2 is P2. In a case that no object is detected within the first distance, for example, within 2.8 meters, it is determined that the detection channel 13 cannot detect the object in the horizontal angle 0.1°. The sequence of detection pulse of the detection channel 13 in the horizontal angle 0.1° is encoded. For example, emit a single pulse 1", while the optical power of the pulse 1" is P". If the capability of distance measurement of the LiDAR 20 is limited by the threshold of the total optical power, in a case that P" = P1 + P2, the capabilities of anti-crosstalk and anti-interference and the capability of distance measurement both are considered without decreasing the total optical power.

If the capability of distance measurement of the LiDAR is limited by the total electrical power consumption, it needs to make the total electrical power consumption of the detection channel during each detection meets the demands of the threshold, while encoding the sequence of detection pulse.

Based on an embodiment of this disclosure, the total optical power of sequences to one detection channel is substantially equal, or the total optical power for each sequence of each detection channel of the LiDAR 20 is substantially equal.

To maximize detection capability, the total optical power of the detection channel during each detection may be kept substantially equal, and substantially equal to the threshold of the human eye safety; or during each detection, the total optical power of each detection channel is kept substantially equal, and substantially equal to the threshold of the human eye safety.

Based on a preferred embodiment of this disclosure, the total electrical power consumption to one detection channel is substantially equal, or the total electrical power consumption of each detection channel of the LiDAR 20 is substantially equal.

To maximize capability of detection, the total electrical power consumption of the detection channel during each detection may be kept substantially equal, and substantially equal to a radiating extreme threshold of the LiDAR; or during each detection, the total electrical power consumption of each detection channel is kept substantially equal, and substantially equal to the radiating extreme threshold of the LiDAR.

At step S13, the laser of the detection channel is controlled to emit a detection pulse based on the code.

At step S14, an echo of the detection pulse reflected by the object is received, and information of the object is determined based on the echo.

To sum up, the detection method 10 has been introduced through the steps S11-S14 and multiple embodiments, and the above steps may be completely reviewed with reference to Fig. 9. A certain channel is ready to detect, and check whether there is the echo within the medium or near distance in a previous detection. If there is the echo, that is, the object is detected within the medium or near distance, it is determined that the echo (the object can be detected) can be received in the current detection, so that a greater number of the encoding pulses is determined and a relatively low luminous intensity of a single pulse is determined. If there is no echo, it is determined that no echo (no object can be detected) can be received in the current detection, so that a fewer number of the encoding pulses is determined and a relatively high luminous intensity of a single pulse is determined. Emission and detection are performed based on the determined number of the encoding pulses with the determined luminous intensity, receive an information of echo till the next detection. In this disclosure, whether a detection channel detects an object within the medium or near distance may be determined, based on multiple previous detection results of the detection channel, or detection results of multiple detection channels adjacent to the detection channel, or multiple detection results of multiple detection channels adjacent to the detection channel. In a case that the total optical power or the total electrical power consumption remains unchanged, the code of the sequence of detection pulse is dynamically changed, so that the capability of distance measurement and the capabilities of anti-crosstalk and anti-interference are both considered.

This disclosure further relates to a computer storage medium, including computer executable instructions stored therein, where when the computer executable instructions are executed by a processor, the detection method 10 described above is performed.

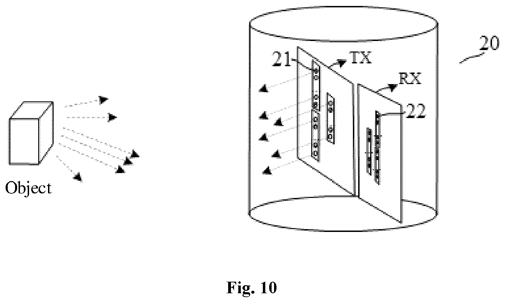

This disclosure further relates to a LiDAR 20, as shown in FIG. 10, including:

multiple lasers 21 configured to emit a sequence of detection pulse;

multiple detectors 22 configured to receive an echo reflected by a target object, where the multiple lasers 21 and the multiple detectors 22 form multiple detection channels, each detection channel includes at least one laser 21 and at least one detector 22, and the laser 21 of each detection channel is configured to emit the sequence of detection pulse including at least one detection pulse; and

a controller apparatus (not shown), where the controller apparatus is connected to the multiple lasers 21 and the multiple detectors 22, and the controller apparatus is configured to:

determine whether there is an object within a first distance based on a previous detection result; where the first distance is not greater than 1/10 of a maximum detectable distance of the LiDAR 20;

dynamically change a code of a sequence of detection pulse of a detection channel based on a determining result;

control the laser 21 of the detection channel to emit a detection pulse based on the code; and

receive an echo of the detection pulse reflected by the object, and determine information of the object based on the echo.

Based on an embodiment of this disclosure, the controller apparatus 23 is further configured to: determine whether there is an object within the first distance based on one or more of the following information:

a previous detection result of the detection channel; and

a previous detection result of a detection channel adjacent to the detection channel in time or space.

Based on an embodiment of this disclosure, the controller apparatus 23 is further configured to: encode one or more of: a power of the detection pulse, or a pulse interval of the detection pulse, or the number of detection pulses in the sequence of the detection pulse emitted by the laser 21 of the detection channel based on the determining result.

Based on a embodiment of this disclosure, the controller apparatus is further configured to: in a case that there is an object within the first distance, increase the number of the detection pulses in the sequence and decrease the power of at least one detection pulse.

Based on a embodiment of this disclosure, the controller apparatus is further configured to: in a case that there is no object within the first distance, decrease the number of the detection pulses in the sequence or use a single detection pulse, and increase the power of the at least one detection pulse in the sequence.

Based on a embodiment of this disclosure, total optical power of the sequence of the detection channel or total electrical power consumption of the detection channel is lower than a threshold.

Based on a preferred embodiment of this disclosure, the total optical power of sequences to one detection channel is substantially equal, or the total optical power for each sequence of each detection channel of the LiDAR 20 is substantially equal.

Based on a preferred embodiment of this disclosure, the total electrical power consumption to one detection channel is substantially equal, or the total electrical power consumption of each detection channel of the LiDAR 20 is substantially equal.

In this disclosure, by analyzing the previous detection result to determine whether there is an object within a medium or near distance in the current detection, in a case that the total optical power or the total electrical power consumption remains unchanged, the code of the sequence of the detection pulse is dynamically changed, so that the capabilities of distance measurement and anti-interference are both considered.

It should be finally noted that the above are merely preferred embodiments of this disclosure, and are not intended to limit this disclosure. Although this disclosure has been described in detail with reference to the foregoing embodiments, those skilled in the art can still modify the technical solutions described in the foregoing embodiments or equivalently replace some of the technical features. Any modifications, equivalents, improvements, or the like, made within the spirit and principle of this disclosure should fall within the protection scope of this disclosure.

**Claims**

1. A detection method for a LiDAR, wherein the LiDAR comprising a plurality of detection channels, each detection channel comprising at least one laser and at least one detector, the laser of ach detection channel configured to emit a sequence of detection pulse comprising at least one detection pulse, and the detection method comprising:

   S11: determining whether there is an object within a first distance based on a previous detection result,
   S12: dynamically changing a code of a sequence of detection pulse of the detection channel based on a determining result;
   S13: controlling a laser of the detection channel to emit the detection pulse based on the code; and
   S14: receiving an echo of the detection pulse reflected by the object, and determining information of the object based on the echo.

2. The detection method based on claim 1, wherein the step S11 comprises: determining whether there is an object within a first distance based on one or more of the following information:

   a previous detection result of the detection channel; and
   a previous detection result of a detection channel adjacent to the detection channel in detection time or space.

3. The detection method based on claim 1, wherein the step S12 comprises: encoding one or more of the power or the pulse interval of the detection pulse or the number of detection pulses in the sequence of detection pulse emitted by the laser of the detection channel, based on the determining result.

4. The detection method based on claim 3, wherein the step S12 further comprises: in a case that there is an object within the first distance, increasing the number of the detection pulses in the sequence and decreasing the power of at least one detection pulse.

5. The detection method based on claim 3, wherein the step S12 further comprises: in a case that there is no object within the first distance, decreasing the number of the detection pulses in the sequence or using a single detection pulse, and increasing the power of the at least one detection pulse in the sequence.

6. The detection method based on any one of claims 1-5, wherein total optical power of the sequence of the detection channel or total electrical power consumption of the detection channel is lower than a threshold.

7. The detection method based on any one of claims 1-5, wherein the total optical power of sequences to one detection channel is substantially equal, or the total optical power for each sequence of each detection channel of the LiDAR is substantially equal.

8. The detection method based on any one of claims 1-5, wherein the total electrical power consumption to one detection channel is substantially equal, or the total electrical power consumption of each detection channel of the LiDAR is substantially equal.

9. A computer storage medium, comprising computer executable instructions stored therein, wherein when the computer executable instructions are executed by a processor, the detection method based on any one of claims 1-8 is implemented.

10. A LiDAR, comprising:

    a plurality of lasers configured to emit a sequence of detection pulse;
    a plurality of detectors configured to receive an echo reflected by a target object, wherein the plurality of lasers and the plurality of detectors form a plurality of detection channels, each detection channel comprises at least one laser and at least one detector, and the laser of each detection channel is configured to emit the sequence of detection pulse comprising at least one detection pulse; and

a controller apparatus connected to the plurality of lasers and the plurality of detectors, wherein the controller apparatus is configured to:

determine whether there is an object within a first distance based on a previous detection result;

dynamically change a code of a sequence of detection pulse of the detection channel based on a determining result;

control the laser of the detection channel to emit a detection pulse based on the code; and

receive an echo of the detection pulse reflected by the object, and determine information of the object based on the echo.

11. The LiDAR based on claim 10, wherein the controller apparatus is further configured to:

determine whether there is the object within the first distance based on one or more of the following information:

a previous detection result of the detection channel; and

a previous detection result of a detection channel adjacent to the detection channel in time or space.

12. The LiDAR based on claim 10, wherein the controller apparatus is further configured to: encode one or more of the power or the pulse interval of the detection pulse or the number of detection pulses in the sequence of detection pulse emitted by the laser of the detection channel based on the determining result.

13. The LiDAR based on claim 12, wherein the controller apparatus is further configured to: in a case that there is an object within the first distance, increase the number of the detection pulses in the sequence and decrease the power of at least one detection pulse.

14. The LiDAR based on claim 12, wherein the controller apparatus is further configured to: in a case that there is no object within the first distance, decrease the number of the detection pulses in the sequence or use a single detection pulse, and increase the power of the at least one detection pulse in the sequence.

15. The LiDAR based on any one of claims 10-14, wherein total optical power of the sequence of the detection channel or total electrical power consumption of the detection channel is lower than a threshold.

16. The LiDAR based on any one of claims 10-14, wherein the total optical power of sequences to one detection channel is substantially equal, or the total optical power for each sequence of each detection channel of the LiDAR is substantially equal.

17. The LiDAR based on any one of claims 10-14, wherein the total electrical power consumption to one detection channel is substantially equal, or the total electrical power consumption of each detection channel of the LiDAR is substantially equal.

Channel B    Channel A

Light
spot

LiDAR

Detector    Laser

Near
distance

Object

**Fig. 1**

Lidar A

Lidar B

**Fig. 2**

Encoding interval

Channel A
emits dual
pulses

Noise point formed
by over-decoding

Encoding interval

Encoding
interval

Channel A
receives
pulse

Channel A emits
echo pulses of dual
pulses

Crosstalk
pulse

Interference
pulse

**Fig. 3**

**10** S11

| Determine whether there is object within first distance based on previous detecting result |
|---|

S12

| Dynamically change code of sequence of detection pulse of detection channel based on determining result |
|---|

S13

| Control laser of detection channel to emit detection pulse based on code |
|---|

S14

| Receive echo of detection pulse reflected by object, and determine information of object based on echo |
|---|

**Fig. 4**

**Fig. 5**

| $\theta_{i-2}$ | $\theta_{i-1}$ | $\theta_i$ |
|---|---|---|

**Fig. 6**

Channel A
emits codes
of triple
pulses

Decode
sucessfully

Channel A
receives

Decode
unsucessfully

**Fig. 7**

Pulse 2, P2

Pulse 1, P1

Δ t1"

t

0°

There is object
within 2.5 m

No object
within 3 m

Pulse 1, P1'    Pulse 2, P2'

Pulse 3, P3'

Δ t1    Δ t2

t

0.1°

Pulse 1, P1"

t

0.1°

**Fig. 8A**

Pulse 1, P1

t

0°

There is object
within 2.5 m

There is object within
2.5 m

Pulse 1, P1'    Pulse 2, P2'

Pulse 3, P3

Δ t1    Δ t2

t

0.2°

Pulse 1, P1"

Pulse 2, P2"

Δ t1"

t

0.2°

**Fig. 8B**

Pulse 1, P1'   Pulse 2, P2'   Pulse 3, P3

Δt1   Δt2

0°

No object within 3 m

No object within 3 m

Pulse 2, P2

Pulse 1, P1

Δt1"

t

0.1°

Pulse 1, P1"

t

0.1°

**Fig. 8C**

Certain channel is ready to detect

Check whether previous detection on channel has echo within medium and near distance

Yes

No

Determine greater number of encoding pulses

Determine fewer number of encoding pulses

Wait for next detection

Determine low luminous intensity of single pulse

Determine high luminous intensity of single pulse

Emit and detect

Determine detected echo information

**Fig. 9**

**Fig. 10**

## INTERNATIONAL SEARCH REPORT

International application No.

**PCT/CN2023/073368**

**A.     CLASSIFICATION OF SUBJECT MATTER**

G01S17/02(2020.01)i;G01S17/04(2020.01)i;G01S7/484(2006.01)i;G01S7/4863(2020.01)i

According to International Patent Classification (IPC) or to both national classification and IPC

**B.     FIELDS SEARCHED**

Minimum documentation searched (classification system followed by classification symbols)

IPC:  G01S

Documentation searched other than minimum documentation to the extent that such documents are included in the fields searched

Electronic data base consulted during the international search (name of data base and, where practicable, search terms used)

CNABS; CNTXT; VEN; VCN; EPTXT; USTXT; WOTXT; CNKI; IEEE: 激光雷达, 通道, 序列, 动态, 编码, 编号, 距离, laser, radar?, tunnel?, sequence, dynamic, number?, coding, distance

**C.     DOCUMENTS CONSIDERED TO BE RELEVANT**

| Category* | Citation of document, with indication, where appropriate, of the relevant passages | Relevant to claim No. |
|---|---|---|
| X | CN 112639527 A (HESAI TECHNOLOGY CO., LTD.) 09 April 2021 (2021-04-09) description, paragraphs [0006]-[0093], and figures 1-7 | 1-17 |
| A | CN 214795206 U (HESAI TECHNOLOGY CO., LTD.) 19 November 2021 (2021-11-19) entire document | 1-17 |
| A | CN 114252866 A (HESAI TECHNOLOGY CO., LTD.) 29 March 2022 (2022-03-29) entire document | 1-17 |
| A | US 2022035035 A1 (BEIJING VOYAGER TECHNOLOGY CO., LTD.) 03 February 2022 (2022-02-03) entire document | 1-17 |

☐ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **13 April 2023** | **11 May 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

**INTERNATIONAL SEARCH REPORT**
Information on patent family members

International application No.

**PCT/CN2023/073368**

| Patent document cited in search report | | | Publication date (day/month/year) | Patent family member(s) | | | Publication date (day/month/year) |
|---|---|---|---|---|---|---|---|
| CN | 112639527 | A | 09 April 2021 | CN | 109116331 | A | 01 January 2019 |
| | | | | US | 2020003877 | A1 | 02 January 2020 |
| | | | | WO | 2020000755 | A1 | 02 January 2020 |
| | | | | US | 10620302 | B2 | 14 April 2020 |
| | | | | CN | 109116331 | B | 24 April 2020 |
| | | | | US | 2020271764 | A1 | 27 August 2020 |
| | | | | EP | 3814796 | A1 | 05 May 2021 |
| | | | | CN | 112639527 | B | 25 February 2022 |
| | | | | EP | 3814796 | A4 | 10 August 2022 |
| CN | 214795206 | U | 19 November 2021 | | None | | |
| CN | 114252866 | A | 29 March 2022 | WO | 2022062382 | A1 | 31 March 2022 |
| US | 2022035035 | A1 | 03 February 2022 | | None | | |

Form PCT/ISA/210 (patent family annex) (July 2022)

**REFERENCES CITED IN THE DESCRIPTION**

**Patent documents cited in the description**

- CN 202210349756